# EUROPEAN PATENT SPECIFICATION

(11) **EP 4 085 203 B1**
(45) Date of publication and mention of the grant of the patent: **20.09.2023**
(21) Application number: 20841744.4
(22) Date of filing: 31.12.2020
(51) Int. Cl.: F16C 33/80, F16C 35/04, F16C 35/063, F16C 35/077, H02K 5/10, H02K 5/15, H02K 5/173

(54) **ELECTRIC MACHINE PROVIDED WITH A RELEASABLE BEARING ASSEMBLY**
ELEKTRISCHE MASCHINE, DIE MIT EINER LÖSBAREN LAGERANORDNUNG VERSEHEN IST
MACHINE ÉLECTRIQUE POURVUE D'UN ENSEMBLE DE PALIER AMOVIBLE

(30) Priority: 31.12.2019 EP 19020729
(43) Date of publication of application: 09.11.2022
(73) Proprietor: ALSTOM Holdings, 93400 Saint-Ouen-sur-Seine (FR)
(72) Inventor: LINDBERG, Johan, 72345 Västeras (SE)
(74) Representative: Alatis
(86) International application number: PCT/EP2020/088080
(87) International publication number: WO 2021/136834

(56) References cited:
- EP-A1- 2 538 527
- EP-A1- 2 610 514
- EP-A1- 2 626 979

## Description

### TECHNICAL FIELD OF THE INVENTION

The present invention relates to electric machines such as electric motors or generators. It relates in particular, albeit not exclusively, to electric motors for driving vehicles, in particular electric motors for rail vehicles.

In principle, the present invention can be applied to any electric machine. However, the benefits are particularly important in the case of permanent magnet-excited electric machines in which high magnetic forces are generated not only when the machine is powered, but permanently.

### BACKGROUND ART

Electric machines for driving vehicles are usually provided with a stator comprising a bearing shield and a fixed labyrinth seal ring, a rotor comprising a rotor shaft and a rotatable labyrinth seal ring mounted on the rotor shaft and facing the fixed labyrinth seal ring at a distance of the fixed labyrinth seal ring so as to form an annular labyrinth between the fixed labyrinth seal ring and rotatable labyrinth seal ring. One or more bearing assemblies are releasably mounted between the bearing shield and the rotor shaft, for guiding a rotation motion of the rotor about the revolution axis and for preventing an axial motion of the rotor relative to the stator.

Such bearings of electric machines are heavily used and must be regularly serviced or replaced. Changing the bearings is relatively complex and involves the risk of damage to components of the electric machine. Usually, the rotor must be dismantled during the bearing change and then reassembled. This may be a difficult task, particularly in the case of permanent magnet-excited electric machines, because of the high magnetic forces occurring in the air gap between the rotor and the stator.

It has been proposed in EP 2 610 514 to build an electric machine, in which the labyrinth rings can be moved relative to one another until they touch one another in a locking position, so that the rotor can be fixed in the axial and radial directions for exchanging the bearings. The labyrinth rings have conically shaped surfaces, which touch each other in the locking position so that a positive connection between the labyrinth rings can be achieved in the locking position, which ensures that the rotor is fixed exactly in the centre of the axis of rotation. The fixed labyrinth ring is connected to the bearing shield by bolts during normal operation of the electric machine. These bolts are loosened for the purpose of transferring the labyrinth ring to the locking position for changing the bearing. The fixed labyrinth ring can be fixed in the locking position by means of at least one locking bolt, preferably three locking bolts arranged at an angle. This ensures a secure fixation of the position of the motor during the bearing change with comparatively little effort. In the maintenance position, the bearings of the electric machine can be serviced or replaced quickly and easily.

One disadvantage of this solution, however, is that the fixation is quite weak, relying on compressive loads on the bolts to form a friction joint in the labyrinth, which provides only reduced contact surfaces. Moreover, grease is usually present in the labyrinth, which further reduces this friction joint. Additionally, this solution is sensitive to the way the locking bolts are tightened and the bolts need to be tightened crosswise with small increments in order to prevent jamming of the rotor. Last but not least, this solution requires specific labyrinth seal rings.

### SUMMARY OF THE INVENTION

The invention aims to overcome at least some of the drawbacks of the prior art and to provide an electric machine that can be easily maintained.

According to a first aspect of the invention, there is provided an electric machine, comprising: a stator, a rotor and a bearing assembly. The stator is provided with a bearing shield assembly comprising a bearing shield and a fixed labyrinth seal ring having a tortuous labyrinth surface. The rotor is rotatable about a revolution axis relative to the stator and comprises a rotor shaft and a rotatable labyrinth seal ring mounted on the rotor shaft. The rotatable labyrinth seal ring has a tortuous labyrinth surface facing the tortuous labyrinth surface of the fixed labyrinth seal ring at a first minimal axial distance of the tortuous labyrinth surface of the fixed labyrinth seal ring so as to form an annular labyrinth between the tortuous labyrinth surface of the fixed labyrinth seal ring and the tortuous labyrinth surface of the rotatable labyrinth seal ring. The bearing assembly is releasably mounted between the bearing shield assembly and the rotor shaft, for guiding a rotation motion of the rotor about the revolution axis, The bearing shield assembly is provided with a fixed contact face, and the rotor further comprises an opposite contact face axially facing the fixed contact face of the bearing shield assembly at a second axial distance of the fixed contact face of the bearing shield assembly, the second axial distance being shorter than the first minimal axial distance.

When the releasable bearing is loosened, it becomes possible to translate the rotor relative to the stator until the fixed contact face reaches the opposite contact face, which happens before the rotatable labyrinth ring contacts the fixed labyrinth seal ring. The fixed contact face and opposite contact face provide large and clean surfaces for locking the rotor to the stator.

In an embodiment, the bearing assembly comprises a bearing cartridge, an outer race ring fitted into the bearing cartridge, and an inner race ring fitted onto the rotor shaft. Preferably, the bearing cartridge is provided with mounting through holes parallel to the revolution axis and aligned with threaded holes of the bearing shield assembly, the bearing assembly comprising fastening bolts inserted into the mounting through holes of the bearing cartridge and screwed into the threaded holes of the bearing shield assembly to fasten the bearing cartridge to the bearing shield assembly. The fastening bolts can be loosened to dismount the bearing assembly.

In an embodiment, the bearing cartridge bears on an outer face of the bearing shield while the fixed labyrinth seal ring bears an inner face of the bearing shield, opposite to the outer face.

In a preferred embodiment, the bearing cartridge is provided with clearance through holes, which are parallel to the revolution axis and aligned with through holes of the bearing shield assembly, and which can be aligned with threaded holes of the rotor in an indexed angular position of the rotor relative to the stator, the clearance through holes having a diameter greater than the through holes of the bearing shield assembly and threaded holes of the rotor, so that in the indexed angular position, locking bolts can be inserted into the clearance through holes and in the through holes of the bearing shield assembly and screwed into the threaded holes of the rotor, with a cylindrical bolt head of the locking bolts bearing axially against an edge of the through holes of the bearing shield assembly. Once the bolt head of one of the locking bolts reaches the edge of the through hole of the bearing shield assembly, subsequent tightening of the bolt will result in a translation movement of the rotor relative to the stator parallel to the bolt axis, i.e. parallel to the revolution axis, until a contact is established between the contact face of the bearing shield assembly and the opposite contact face of the rotor. This translation is guided by the radial contact between the bolt shanks and the inner wall of the through holes of the bearing shield assembly. Once the contact between the contact faces is established, the locking bolts are further tightened until the tensile loaded locking bolts provide sufficient pressure between the contact faces and the rotor is locked by the frictional engagement of the contact faces.

In one embodiment, a thrust washer is releasably fixed at an end of the rotor shaft so as to axially bear against the inner race ring of the bearing assembly. An opposite axial end of the inner race ring may bear against a shoulder of the rotor shaft or another axial stop.

In one embodiment, the bearing assembly comprises rolling elements between the outer race ring and inner race ring. The rolling elements may include balls, cylindrical, tapered or barrel-shaped rollers, arranged in one or several rows.

In one embodiment, an inner bearing space filled with lubricant is formed between the inner race ring and outer race ring and sealed by the annular labyrinth formed between the fixed labyrinth seal ring and rotatable labyrinth seal ring. The lubricant is preferably grease.

In one embodiment, an outer bearing cover is releasably fixed to the bearing shield assembly. The outer bearing cover may close the inner lubrication space of the bearing, which extends from the outer bearing cover to the labyrinth seal rings. The outer bearing preferably covers the mounting through holes and/or the clearance through holes of the bearing cartridge.

In one embodiment, the fixed contact face is made of an electric insulation material. Alternatively, or additionally, the opposite contact face is made of an electric insulation material. This ensures that no current will flow through the contact faces when they are in contact.

In one embodiment, the fixed contact face is made in one piece with the fixed labyrinth seal ring. Alternatively, the fixed contact face is formed on the bearing shield.

In a preferred embodiment, the fixed contact face includes at least a planar portion, which faces a planar portion of the opposite contact face at said second axial distance.

Advantageously, the fixed labyrinth seal ring and rotatable labyrinth seal ring are provided with interleaved tubular ribs aligned with the revolution axis, the labyrinth being formed by a continuous annular space between said interleaved tubular ribs.

In embodiment, the electric machine is a drive motor of a rail vehicle .

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is an isometric view, from a drive side, of an electric machine according to an embodiment of the invention;
- figure 2 is an isometric view of the electric machine of figure 1, from a non-drive side during a step of disassembly of a first bearing assembly on the non-drive side of the electric machine;
- figure 3 is a front view of the electric machine of figure 1, from the non-drive side, without an outer bearing cover;
- figure 4 is an axial section of the electric machine of figure 1 by a section plane IV-IV illustrated in figure 3;
- figure 5 is an axial section of the electric machine of figure 1 by a section plane V-V illustrated in figure 3;
- figure 6 illustrates a detail of the electric machine of figure 1, during a step of disassembly of the first bearing assembly on the non-drive side of the electric machine, in the section plane V-V illustrated in figure 3;
- figure 7 illustrates a detail of the electric machine of figure 1, during another step of disassembly of the first bearing assembly on the non-drive side of the electric machine, in the section plane V-V illustrated in figure 3;

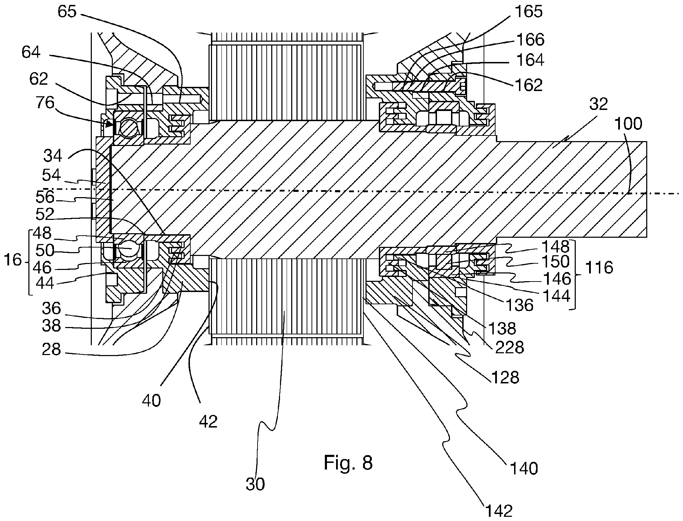

- figure 8 illustrates a detail of the electric machine of figure 1, during the step of disassembly of figure 7, in the section plane IV-IV illustrated in figure 3;
- figure 9 illustrates a detail of the electric machine of figure 1, during a step of disassembly of a second bearing assembly on the drive side of the electric machine, in the section plane V-V illustrated in figure 3;
- figure 10 illustrates a detail of the electric machine of figure 1, during another step of disassembly of the second bearing assembly on the drive side of the electric machine, in the section plane V-V illustrated in figure 3.

Corresponding reference numerals refer to the same or corresponding parts in each of the figures.

### DETAILED DESCRIPTION OF PREFERRED EMBODIMENTS

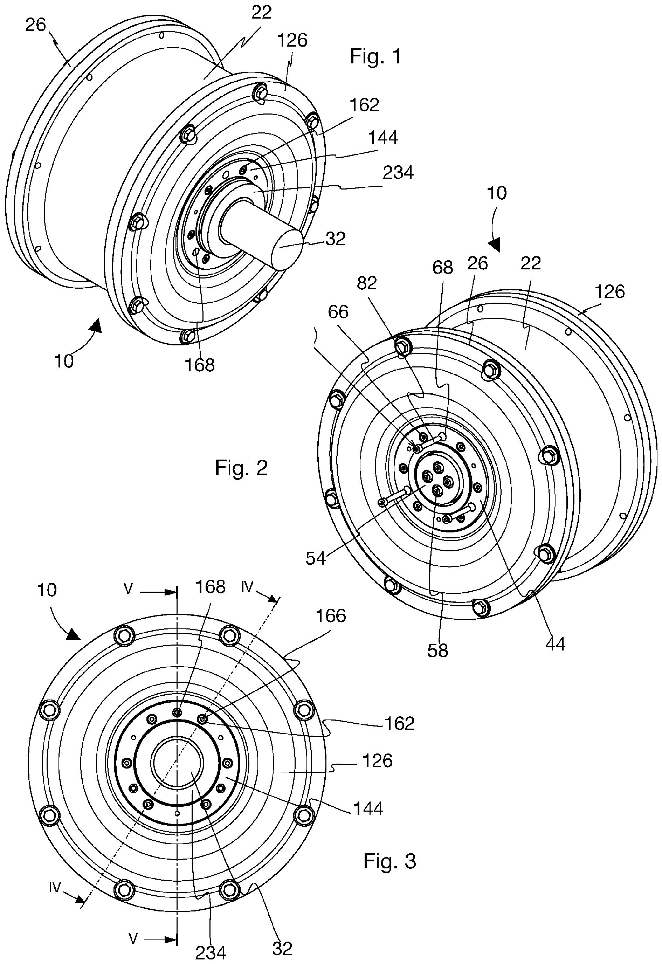

With reference to figures **1** to **5****,** an electric machine **10,** e.g. a drive motor of a rail vehicle, comprises a stator **12,** a rotor **14,** a first bearing assembly **16** at a non-drive end of the electric machine **10** and a second bearing assembly **116** at a drive end of the electric machine **10** for guiding a rotation motion of the rotor **14** relative to the stator **12** about a revolution axis **100** of the electric machine **10.**

The stator **12** is provided with stator windings **18** housed in a stator housing **20,** which comprises a stator frame **22** a first bearing shield assembly **24** at the non-drive end of the electric machine **10** and a second bearing shield assembly **124** at the drive end of the electric machine **10.** The first bearing shield assembly **24** is annular and includes a bearing shield **26** and a fixed labyrinth seal ring **28.** The second bearing shield assembly **124** is annular and includes a bearing shield **126** and two fixed labyrinth seal rings **128, 228.**

The rotor **14** is centred on the revolution axis **100** and comprises a set of rotor windings or permanent magnets **30,** a rotor shaft **32,** a first rotatable labyrinth seal ring **34** mounted on the rotor shaft **32** and facing the fixed labyrinth seal ring **28** of the first bearing shield assembly **24,** and a pair of second rotatable labyrinth seal rings **134, 234** mounted on the rotor shaft **32** and facing the two fixed labyrinth seal rings **128, 228** of the second bearing shield assembly **124.** The fixed labyrinth seal rings **28, 128, 228** and rotatable labyrinth seal rings **34, 134, 234** are provided with interleaved tubular ribs **36, 38, 136, 138, 236, 238** aligned with the revolution axis **100** and a tortuous path is formed by a continuous annular space between the interleaved tubular ribs **36, 38, 136, 138, 236, 238.**

In the axial direction parallel to the revolution axis **100,** a minimal distance **D1** separates the tortuous labyrinth surface formed by the tubular ribs **38** of rotatable labyrinth seal ring **34** from the tortuous labyrinth surface formed by the tubular ribs **36** of the fixed labyrinth seal ring **28.**

Remarkably, the bearing shield assembly **24** is provided with one or more fixed contact faces **40** and the rotor **14** further comprises one or more opposite contact faces **42** axially facing the fixed contact face(s) **40** of the bearing shield assembly **24** at an axial distance **D2** of the fixed contact face of the bearing shield assembly, with **D2** < **D1.** The fixed contact face(s) and opposite contact face are planar faces perpendicular to the revolution axis.

A minimal distance **D11** separates, in the axial direction parallel to the revolution axis **100,** the tortuous labyrinth surfaces formed by the tubular ribs **138, 238** of the rotatable labyrinth seal rings **134, 234** from the tortuous labyrinth surfaces formed by the tubular ribs **136, 138** of the fixed labyrinth seal rings **128, 228. D11** is such that and **D2** < **D11** and is preferably equal to **D1.**

Similarly, the bearing shield assembly **124** is provided with one or more fixed contact faces **140** and the rotor **14** further comprises one or more opposite contact faces **142** axially facing the fixed contact face(s) **140** of the bearing shield assembly **124** at an axial distance **D22** of the fixed contact face of the bearing shield assembly, with **D12 < D11.** The fixed contact face(s) and opposite contact face are planar faces perpendicular to the revolution axis. Preferably, **D12** is equal to **D2.**

The first bearing assembly **16** at the non-drive end of the electric machine **10** is mounted between the first bearing shield assembly **24** and the rotor **14** while the second bearing assembly **116** is mounted between the second bearing shield assembly **124** and the rotor **14** for guiding a rotation motion of the rotor **14** about the revolution axis **100.**

More specifically, the first bearing assembly **16** comprises a bearing cartridge **44,** an outer race ring **46** force fitted into the bearing cartridge **44,** an inner race ring **48** force fitted onto the rotor shaft **14** and rolling elements **50** between the inner race ring **48** and outer race ring **46.** In this embodiment, the rolling elements **50** are balls, and the inner and outer race rings **48, 46** have a concave cross-section. The inner race ring **48** bears axially against a shoulder **52** of the rotor shaft **14.** A thrust washer **54** is releasably fixed at an end **56** of the rotor shaft **32** by means of bolts **58** so as to axially bear against the inner race ring **48** of the bearing assembly **16.**

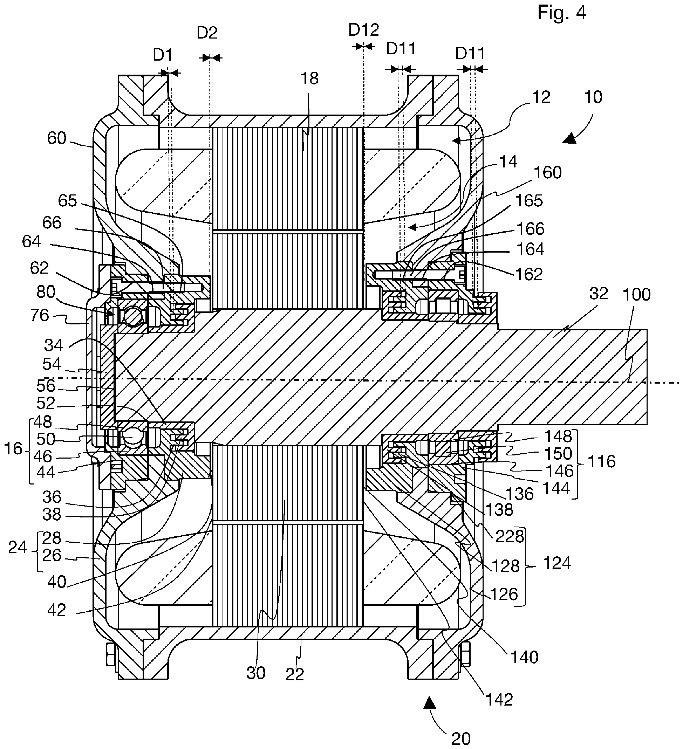

As depicted in figure **4****,** the bearing cartridge **44** bears axially against an outer side **60** of the bearing shield **26** and is provided with a set of several, preferably three or more, mounting through holes **62** distributed over the circumference of the bearing cartridge **44** and extending in a direction parallel to the revolution axis **100.** The mounting through holes **62** are aligned with intermediate holes **64** of the bearing shield **26** and threaded holes **65** of fixed labyrinth seal ring **28.** Fastening bolts **66** are inserted into the mounting through holes **62** of the bearing cartridge and screwed into the threaded holes **64** of the bearing shield **26** to fasten the bearing cartridge **44** to the bearing shield **26.**

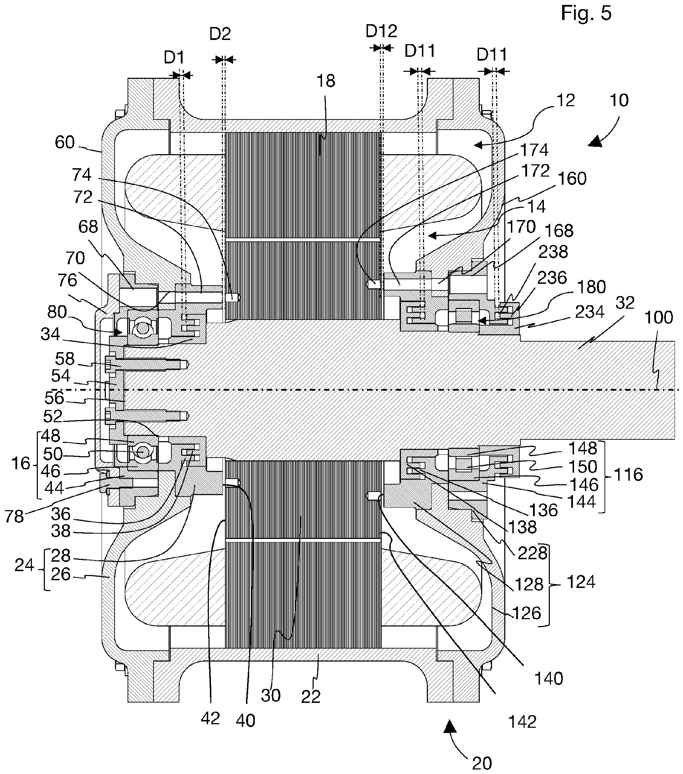

The bearing cartridge **44** is further provided with a set of several, preferably three or more, clearance through holes **68** distributed over the circumference of the bearing cartridge **44,** illustrated in figure **5****,** which are parallel to the revolution axis **100** and aligned with through holes **70, 72** of the bearing shield assembly **24,** in this embodiment through the bearing shield **26** and the fixed labyrinth seal ring **28.**

These clearance through holes **68** are aligned with threaded holes **74** of the rotor **14** when the rotor **14** is placed in an indexed angular position relative to the stator **12.** The clearance through holes **68** have a diameter greater than the through holes **70, 72** of the bearing shield assembly and threaded holes **74** of the rotor.

An outer bearing cover **76** is releasably fixed to the bearing shield **26** by means of bolts **78** and covers the mounting through holes **62** and the clearance through holes **68** of the bearing cartridge **44.** A sealed lubrication volume **80** is formed between the inner and outer race rings **48, 46,** closed at one axial end by the outer bearing cover **76** and sealed at the opposite axial end by the labyrinth seal formed by the fixed labyrinth seal ring **28** and rotatable labyrinth seal ring **34.** This lubrication volume can be filled with a lubricant, preferably grease.

Similarly, the second bearing assembly **16** at the drive end of the electric machine comprises a bearing cartridge **144** integral with the fixed labyrinth seal ring **228,** an outer race ring **146** force fitted into the bearing cartridge **144,** an inner race ring **148** force fitted onto the rotor shaft **14** and rolling elements **150** between the inner race ring **148** and outer race ring **146.** In this embodiment, the rolling elements are cylindrical rollers and the races of the inner race ring **148** and outer race ring **46** are cylindrical. The inner race ring **148** bears axially against a shoulder **152** of the rotor shaft **14.**

As depicted in figure **4****,** the bearing cartridge **144** bears axially against an outer side **160** of the bearing shield **126** and is provided with a set of several, preferably three or more, mounting through holes **162** distributed over the circumference of the bearing cartridge **144** and extending in a direction parallel to the revolution axis **100.** The mounting through holes **162** are aligned with intermediate through holes of the bearing shield **126** and threaded holes **165** of the fixed labyrinth seal ring **128.** Fastening bolts **166** are inserted into the mounting through holes **162** of the bearing cartridge **144** and screwed into the threaded holes **164** of the bearing shield **126** to fasten the bearing cartridge **144** to the bearing shield **126.**

The bearing cartridge **144** is further provided with a set of several, preferably three or more, clearance through holes **168** distributed over the circumference of the bearing cartridge **144,** illustrated in figure **5****,** which are parallel to the revolution axis **100** and aligned with through holes **170, 172** of the bearing shield assembly **124,** in this embodiment through the bearing shield **126** and the fixed labyrinth seal ring **128.** These clearance through holes **168** can be aligned with threaded holes **174** of the rotor **14** when the rotor **14** is in an indexed angular position relative to the stator **12.** The clearance through holes **168** have a diameter greater than the through holes **170, 172** of the bearing shield assembly and threaded holes **174** of the rotor.

A sealed lubrication volume **180** is formed between the inner and outer race rings **48, 46,** sealed at the one axial end by the labyrinth seal formed by the fixed labyrinth seal ring **128** and rotatable labyrinth seal ring **134** and sealed at the opposite axial end by the labyrinth seal formed by the fixed labyrinth seal ring **228** integral with the bearing cartridge **144** and rotatable labyrinth seal ring **34.** This lubrication volume can be filled with a lubricant, preferably grease.

To dismount the first bearing assembly **16** at the non-drive end of the electric machine **10,** it is first necessary to unscrew the bolts **78** and remove the outer bearing cover **76,** which gives access to the clearance through holes **68** of the bearing cartridge **44** and to the mounting through holes **62** of the bearing cartridge **44.**

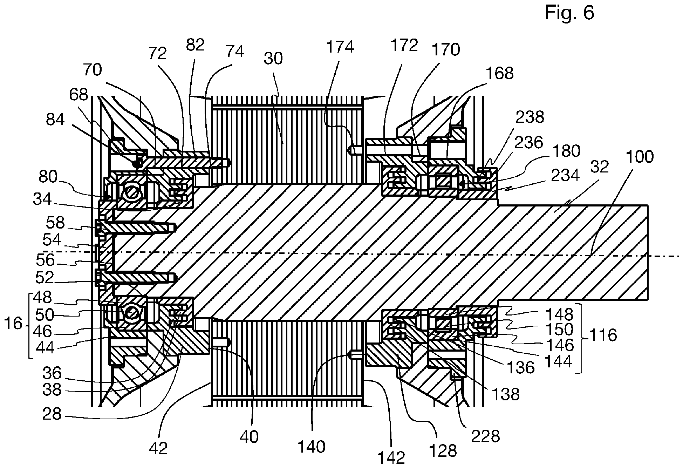

The rotor **14** is rotated to the indexed angular position, and locking bolts **82** are inserted into the clearance through holes **68** (see figure **2**) and in the through holes **70, 72** of the bearing shield assembly **24 .** The locking bolts **82** are screwed into the threaded holes **74** of the rotor **14,** until a cylindrical bolt head **84** of the locking bolts **82** bears axially against an edge **86** of the through holes **70** of the bearing shield **26** as illustrated in figure **6****.**

Once the bolt heads **84** of the locking bolts **82** reach the edges **86** of the through holes **70** of the bearing shield **26,** the shanks of the locking bolts **82** are in contact with the inner walls of the through holes **70, 72** of the bearing shield **24** and fixed labyrinth seal ring **28** and ensure a centred positioning of the rotor **14** relative to the revolution axis **10** independent from the bearing assembly **16.** The mounting bolts **66** can therefore be at least partially unscrewed to allow a limited translation movement of the rotor **14** relative to the stator **12.**

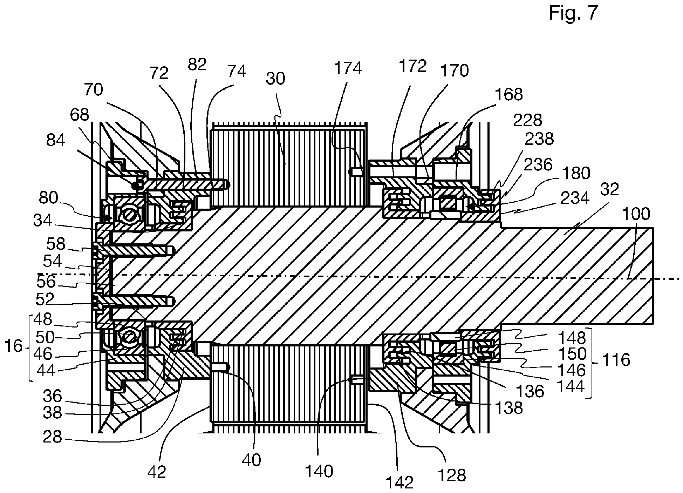

Subsequent tightening of the locking bolts **82** results in a translation movement of the rotor **14** relative to the stator **12** parallel to the locking bolt axis, i.e. parallel to the revolution axis **100,** until a contact is established between the contact face **40** of the bearing shield assembly **24** and an opposite contact face **42** of the rotor **14,** as illustrated in figure **7****.** This translation is guided by the radial contact between the shanks of the locking bolts **82** and the inner walls of the through holes **70, 72** of the bearing shield assembly **24** and/or by the rolling bodies **50** and inner race ring **48.** Once the contact between the contact faces **40, 42** is established, the locking bolts **82** are further tightened until the tensile loaded locking bolts **82** provide sufficient pressure between the contact faces **40, 42** and the rotor **14** is locked by the frictional engagement of the contact faces **40, 42.** Remarkably, no contact occurs between the interleaved ribs **36, 38** of the fixed labyrinth seal ring and movable labyrinth seal ring, because **D2<D1.** Similarly, no contact occurs between the interleaved ribs **136, 138, 236, 238** of the fixed labyrinth seal rings **128, 228** and movable labyrinth seal rings **134, 234,** because **D2<D11.** During the translation movement of the rotor, the cylindrical roller **150** slide on the race of the inner race ring **148.**

If they have not been completely removed at the end of the step of figure **5****,** the mounting bolts **66** can be fully unscrewed and removed as well as the bolts **58.** The bearing cartridge **76,** outer race ring **46** and rolling bodies **50** can be removed before a ring puller is inserted to reach the remote end face of the inner ring **48** and pull the inner race ring **48.**

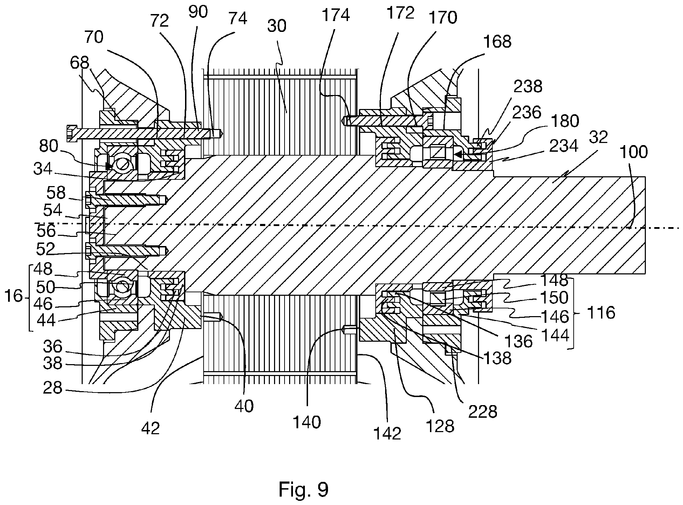

To dismount the second bearing assembly **116** at the drive end of the electric machine **10,** it is first necessary to unscrew the bolts **78** and remove the outer bearing cover **76** at the non-drive end of the electric machine **10,** as illustrated in figure **9****,** which gives access to the clearance through holes **68** of the bearing cartridge **44** and to the mounting through holes **62** of the bearing cartridge **44.**

The rotor **14** is rotated to the indexed angular position, and, optionally, a threaded indexing rod **90** is inserted into the clearance through holes **68** and in the through holes **70, 72** of the bearing shield assembly **24** and screwed into the threaded holes **74** of the rotor **14,** as illustrated in figure **9****.**

Once the indexing rod **90** has is in place, the shanks of the indexing rod **90** are in contact with the inner walls of the through holes **70, 72** of the bearing shield **24** and fixed labyrinth seal ring **28** and ensure a centred positioning of the rotor **14** relative to the revolution axis **10** independent from the bearing assembly **16.** The mounting bolts **66** can therefore be at least partially unscrewed to allow a limited translation movement of the rotor **14** relative to the stator **12.**

Once these preliminary steps have been completed at the non-drive end of the electric machine **10,** the actual operation at the drive end can start. Locking bolts **182** are inserted into the clearance through holes **168** and in the through holes **170, 172** of the bearing shield assembly **124** and screwed into the threaded holes **174** of the rotor **14,** until a cylindrical bolt head **184** of the locking bolts **182** bears axially against an edge **186** of the through holes **170** of the bearing shield **126** as illustrated in figures **9****.**

Once the bolt heads **184** of the locking bolts **182** have reached the edges **186** of the through holes **170** of the bearing shield **126,** the shanks of the locking bolts **182** are in contact with the inner walls of the through holes **170, 172** of the bearing shield **124** and fixed labyrinth seal ring **128** and ensure a centred positioning of the rotor **14** relative to the revolution axis **10** independent from the bearing assembly **116.** The mounting bolts **166** can therefore be at least partially unscrewed to allow a limited translation movement of the rotor **14** relative to the stator **12.**

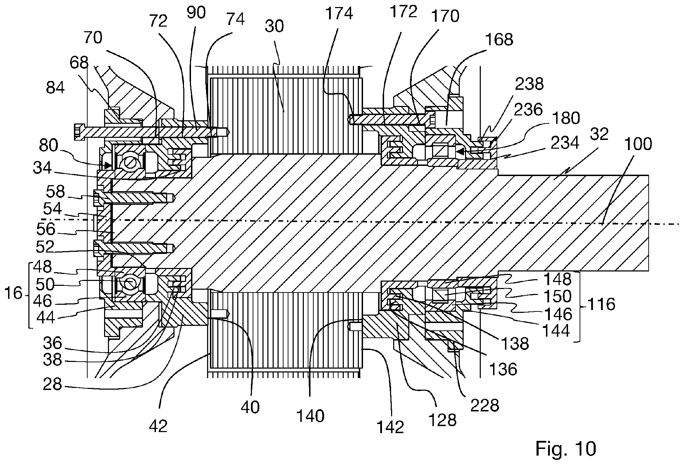

Subsequent tightening of the locking bolts **182** results in a translation movement of the rotor **14** relative to the stator **12** parallel to the locking bolt axis, i.e. parallel to the revolution axis **100,** until a contact is established between the contact face **140** of the bearing shield assembly **124** and an opposite contact face **142** of the rotor **14,** as illustrated in figure **10****.** This translation is guided by the radial contact between the shanks of the locking bolts **182** and the inner walls of the through holes **170, 172** of the bearing shield assembly **124** and/or by the rolling bodies **150** and inner race ring **148.** Once the contact between the contact faces **140, 142** is established, the locking bolts **182** are further tightened until the tensile loaded locking bolts **182** provide sufficient pressure between the contact faces **140, 142** and the rotor **14** is locked by the frictional engagement of the contact faces **140, 142.** Remarkably, no contact occurs between the interleaved ribs **136, 138, 236, 238** of the fixed labyrinth seal ring and movable labyrinth seal ring, because of the fixed labyrinth seal rings **128, 228** and movable labyrinth seal rings **134, 234,** because **D12<D11.** Remarkably, the bearing assembly **16** at the non-drive end of the electric machine **10** moves with the rotor **14** and the thrust washer **54** and pushes the fixed labyrinth seal ring **28** away from the bearing shield **26,** while the relative angular position between both parts is maintained by the indexing rod **90.** The movable labyrinth seal ring **223** can then be pulled out as shown in figure **9****,** and the bearing cartridge **176,** outer race ring **146** and rolling bodies **150** can be removed before a ring puller is inserted to reach the remote end face of the inner ring **148** and pull the inner race ring **148.**

The bearing shields **26, 126** are preferably metallic. The fixed labyrinth seal rings **28, 128, 228** are preferably made of an electric insulation material, so that no electric path is generated when the contact surfaces **40, 42, 140, 142** touch each other.

As a variant, the subsequent tightening of the locking bolts **82** after the step of figure **4** may result in an elastic deformation of the bearing shield **26,** which results in a contact between the contact faces **40, 42** without translation of the rotor **14** relative to the stator **12.** Alternatively, a deformation of the rotor press plate in which the threaded holes **74** are located can take place.

A clearance may be preserved between the shanks of the locking bolts **82** and the through holes **70, 72** of the bearing shield **24** and fixed labyrinth seal ring **28,** in which case the centred positioning of the rotor **14** relative to the revolution axis **10** when the mounting bolts **66** are removed is provided by the bearing assembly **16.**

## Claims

1. An electric machine (10), comprising:
- a stator (12) comprising a bearing shield assembly (24, 124) comprising a bearing shield (26, 126) and a fixed labyrinth seal ring (28, 128) having a tortuous labyrinth surface (36, 136),
- a rotor (14) rotatable about a revolution axis (100) relative to the stator (12), the rotor (14) comprising a rotor shaft (32) and a rotatable labyrinth seal ring (34, 134) mounted on the rotor shaft (14), the rotatable labyrinth seal ring (34, 134) having a tortuous labyrinth surface (38, 138) facing the tortuous labyrinth surface (36, 136) of the fixed labyrinth seal ring (28, 128) at a first minimal axial distance (D1, D11) of the tortuous labyrinth surface (36, 136) of the fixed labyrinth seal ring (28, 128) so as to form an annular labyrinth between the tortuous labyrinth surface (36, 136) of the fixed labyrinth seal ring (28, 128) and the tortuous labyrinth surface (38, 138) of the rotatable labyrinth seal ring (34, 134), and
- a bearing assembly (16, 116) releasably mounted between the bearing shield assembly (24, 124) and the rotor shaft (32), for guiding a rotation motion of the rotor (14) relative to the stator (12) about the revolution axis (100),
**characterised in that** the bearing shield assembly (24, 124) is provided with a fixed contact face (40, 140) and the rotor (14) further comprises an opposite contact face (42, 142) axially facing the fixed contact face (40, 140) of the bearing shield assembly (24, 124) at a second axial distance (D2, D12) of the fixed contact face (40, 140) of the bearing shield assembly (24, 124), the second axial distance (D2, D12) being shorter than the first minimal axial distance (D1, D11).

2. The electric machine (10) of claim 1, wherein the bearing assembly (16, 116) comprises a bearing cartridge (44, 144), an outer race ring (46, 146) fitted into the bearing cartridge (44, 144), and an inner race ring (48, 148) fitted onto the rotor shaft (32).

3. The electric machine (10) of claim 2, wherein the bearing cartridge (44, 144) is provided with mounting through holes (62, 162) parallel to the revolution axis (100) and aligned with threaded holes (65, 165) of the bearing shield assembly (24, 124), the bearing assembly (16, 116) comprising fastening bolts (66, 166) inserted into the mounting through holes (62, 162) of the bearing cartridge (44, 144) and screwed into the threaded holes (65, 165) of the bearing shield assembly (24, 124) to fasten the bearing cartridge (44, 144) to the bearing shield assembly (24, 124).

4. The electric machine (10) of any one of claims 2 to 3, wherein the bearing cartridge (44, 144) is provided with clearance through holes (68, 168), which are parallel to the revolution axis (100) and aligned with through holes (70, 72, 170, 172) of the bearing shield assembly (24, 124), and which can be aligned with threaded holes (74, 174) of the rotor (14) in an indexed angular position of the rotor (14) relative to the stator (12), the clearance through holes (68, 168) having a diameter greater than the through holes (70, 72, 170, 172) of the bearing shield assembly and threaded holes (74, 174) of the rotor (14), so that in the indexed angular position, locking bolts (82, 182) can be inserted into the clearance through holes (68, 168) and in the through holes (70, 72, 170, 172) of the bearing shield assembly (24, 124) and screwed into the threaded holes (74, 174) of the rotor (14), with a cylindrical bolt head (84) of the locking bolts (82) bearing axially against an edge of the through holes (70, 72, 170, 172) of the bearing shield assembly (24).

5. The electric machine (10) of any one of claims 2 to 4, further comprising a thrust washer (54) releasably fixed at an end of the rotor shaft (32) so as to axially bear against the inner race ring (48) of the bearing assembly (16).

6. The electric machine (10) of any one of claims 2 to 5, wherein the bearing assembly (10) comprises rolling elements (50, 150) between the outer race ring (46, 146) and inner race ring (48, 148).

7. The electric machine (10) of any one of claims 2 to 6, wherein an inner bearing space (80, 180) filled with lubricant is formed between the inner race ring (48, 148) and outer race ring (50, 150) and sealed by the annular labyrinth formed between the fixed labyrinth seal ring (28, 128) and the rotatable labyrinth seal ring (34, 134).

8. The electric machine (10) of any one of claims 2 to 7, further comprising an outer bearing cover (76) releasably fixed to the bearing shield assembly (24).

9. The electric machine (10) of any one of the preceding claims, wherein the fixed contact face (40, 140) is made of an electric insulation material.

10. The electric machine (10) of any one of the preceding claims, wherein the opposite contact face (42, 142) is made of an electric insulation material.

11. The electric machine of any one of claims 1 to 10, wherein the fixed contact face (40, 140) is made in one piece with the fixed labyrinth seal ring (28, 128).

12. The electric machine of any one of claims 1 to 10, wherein the fixed contact face (40, 140) is formed on the bearing shield (26, 126).

13. The electric machine (10) of any one of the preceding claims, wherein the fixed contact face (40, 140) includes at least a planar portion facing a planar portion of the opposite contact face (42, 142) at said second axial distance.

14. The electric machine (10) of any one of the preceding claims, wherein the fixed labyrinth seal ring (28, 128) and the rotatable labyrinth seal ring (34, 134) are provided with interleaved tubular ribs (36, 38, 136, 138) aligned with the revolution axis (100), the labyrinth being formed by a continuous annular space between said interleaved tubular ribs (36, 38, 136, 138).

15. The electric machine (10) of any one of the preceding claims, wherein the electric machine (10) is a drive motor of a rail vehicle.

## Patentansprüche

1. Elektrische Maschine (10), umfassend:
- einen Stator (12) umfassend eine Lagerschildanordnung (24, 124) umfassend ein Lagerschild (26, 126) und einen festen Labyrinthdichtungsring (28, 128), der eine verschlungene Labyrinthoberfläche (36, 136) aufweist,
- einen Rotor (14), der um eine Drehachse (100) relativ zu dem Stator (12) drehbar ist, der Rotor (14) umfassend eine Rotorwelle (32) und einen drehbaren Labyrinthdichtungsring (34, 134), der an der Rotorwelle (14) montiert ist, wobei der drehbare Labyrinthdichtungsring (34, 134) eine der verschlungenen Labyrinthoberfläche (36, 136) des festen Labyrinthdichtungsrings (28, 128) zugewandte verschlungene Labyrinthoberfläche (38, 138) in einem ersten minimalen axialen Abstand (D1, D11) der verschlungenen Labyrinthoberfläche (36, 136) des festen Labyrinthdichtungsrings (28, 128) aufweist, um ein ringförmiges Labyrinth zwischen der verschlungenen Labyrinthoberfläche (36, 136) des festen Labyrinthdichtungsrings (28, 128) und der verschlungenen Labyrinthoberfläche (38, 138) des drehbaren Labyrinthdichtungsrings (34, 134) zu bilden, und
- eine Lageranordnung (16, 116), die lösbar zwischen der Lagerschildanordnung (24, 124) und der Rotorwelle (32) montiert ist, um eine Drehbewegung des Rotors (14) relativ zu dem Stator (12) um die Drehachse (100) zu führen,
**dadurch gekennzeichnet, dass** die Lagerschildanordnung (24, 124) mit einer festen Kontaktfläche (40, 140) bereitgestellt ist und der Rotor (14) ferner eine gegenüberliegende Kontaktfläche (42, 142) umfasst, die axial der festen Kontaktfläche (40, 140) der Lagerschildanordnung (24, 124) in einem zweiten axialen Abstand (D2, D12) der festen Kontaktfläche (40, 140) der Lagerschildanordnung (24, 124) zugewandt ist, wobei der zweite axiale Abstand (D2, D12) kürzer als der erste minimale axiale Abstand (D1, D11) ist.

2. Elektrische Maschine (10) nach Anspruch 1, wobei die Lageranordnung (16, 116) eine Lagerpatrone (44, 144), einen Außenlaufring (46, 146), der in die Lagerpatrone (44, 144) angebracht ist, und einen Innenlaufring (48, 148), der auf der Rotorwelle (32) angebracht ist, umfasst.

3. Elektrische Maschine (10) nach Anspruch 2, wobei die Lagerpatrone (44, 144) mit Montagedurchgangslöchern (62, 162) parallel zur Drehachse (100) bereitgestellt ist und mit Gewindelöchern (65, 165) der Lagerschildanordnung (24, 124) ausgerichtet ist, wobei die Lageranordnung (16, 116) Sicherungsbolzen (66, 166) umfasst, die in die Montagedurchgangslöcher (62, 162) der Lagerpatrone (44, 144) eingesetzt und in die Gewindelöcher (65, 165) der Lagerschildanordnung (24, 124) eingeschraubt sind, um die Lagerpatrone (44, 144) an der Lagerschildanordnung (24, 124) zu sichern.

4. Elektrische Maschine (10) nach einem der Ansprüche 2 bis 3, wobei die Lagerpatrone (44, 144) mit Spieldurchgangslöchern (68, 168) bereitgestellt ist, die parallel zu der Drehachse (100) liegen und mit Durchgangslöchern (70, 72, 170, 172) der Lagerschildanordnung (24, 124) ausgerichtet sind, und die mit Gewindelöchern (74, 174) des Rotors (14) in einer indizierten Winkelposition des Rotors (14) relativ zu dem Stator (12) ausgerichtet werden können, wobei die Spieldurchgangslöcher (68, 168) einen Durchmesser aufweisen, der größer als die Durchgangslöcher (70, 72, 170, 172) der Lagerschildanordnung und die Gewindelöcher (74, 174) des Rotors (14) ist, sodass in der indizierten Winkelposition Verriegelungsbolzen (82, 182) in die Spieldurchgangslöcher (68, 168) und in die Durchgangslöcher (70, 72, 170, 172) der Lagerschildanordnung (24, 124) eingesetzt und in die Gewindelöcher (74, 174) des Rotors (14) eingeschraubt werden können, wobei ein zylindrischer Bolzenkopf (84) der Verriegelungsbolzen (82) axial gegen einen Rand der Durchgangslöcher (70, 72, 170, 172) der Lagerschildanordnung (24) gelagert ist.

5. Elektrische Maschine (10) nach einem der Ansprüche 2 bis 4, ferner umfassend eine Druckscheibe (54), die lösbar an einem Ende der Rotorwelle (32) befestigt ist, um axial gegen den inneren Laufring (48) der Lageranordnung (16) gelagert zu sein.

6. Elektrische Maschine (10) nach einem der Ansprüche 2 bis 5, wobei die Lageranordnung (10) Rollelemente (50, 150) zwischen dem Außenlaufring (46, 146) und dem Innenlaufring (48, 148) umfasst.

7. Elektrische Maschine (10) nach einem der Ansprüche 2 bis 6, wobei ein mit Schmiermittel gefüllter Innenlagerraum (80, 180) zwischen dem Innenlaufring (48, 148) und dem Außenlaufring (50, 150) gebildet und durch das zwischen dem festen Labyrinthdichtungsring (28, 128) und dem drehbaren Labyrinthdichtungsring (34, 134) gebildete ringförmige Labyrinth abgedichtet ist.

8. Elektrische Maschine (10) nach einem der Ansprüche 2 bis 7, ferner umfassend eine äußere Lagerabdeckung (76), die lösbar an der Lagerschildanordnung (24) befestigt ist.

9. Elektrische Maschine (10) nach einem der vorstehenden Ansprüche, wobei die feste Kontaktfläche (40, 140) aus einem elektrischen Isoliermaterial hergestellt ist.

10. Elektrische Maschine (10) nach einem der vorstehenden Ansprüche, wobei die gegenüberliegende Kontaktfläche (42, 142) aus einem elektrischen Isoliermaterial hergestellt ist.

11. Elektrische Maschine nach einem der Ansprüche 1 bis 10, wobei die feste Kontaktfläche (40, 140) einstückig mit dem festen Labyrinthdichtungsring (28, 128) hergestellt ist.

12. Elektrische Maschine nach einem der Ansprüche 1 bis 10, wobei die feste Kontaktfläche (40, 140) an dem Lagerschild (26, 126) ausgebildet ist.

13. Elektrische Maschine (10) nach einem der vorstehenden Ansprüche, wobei die feste Kontaktfläche (40, 140) mindestens einen ebenen Abschnitt einschließt, der einem ebenen Abschnitt der gegenüberliegenden Kontaktfläche (42, 142) in dem zweiten axialen Abstand zugewandt ist.

14. Elektrische Maschine (10) nach einem der vorstehenden Ansprüche, wobei der feste Labyrinthdichtungsring (28, 128) und der drehbare Labyrinthdichtungsring (34, 134) mit verschachtelten röhrenförmigen Rippen (36, 38, 136, 138) bereitgestellt sind, die mit der Drehachse (100) ausgerichtet sind, wobei das Labyrinth durch einen durchgehenden ringförmigen Raum zwischen den verschachtelten röhrenförmigen Rippen (36, 38, 136, 138) gebildet wird.

15. Elektrische Maschine (10) nach einem der vorstehenden Ansprüche, wobei die elektrische Maschine (10) ein Antriebsmotor eines Schienenfahrzeugs ist.

## Revendications

1. Machine électrique (10), comprenant :
- un stator (12) comprenant un assemblage de flasque (24, 124) comprenant un flasque (26, 126) et une bague d'étanchéité à labyrinthe fixe (28, 128) ayant une surface de labyrinthe tortueuse (36, 136),
- un rotor (14) rotatif autour d'un axe de révolution (100) par rapport au stator (12), le rotor (14) comprenant un arbre de rotor (32) et une bague d'étanchéité à labyrinthe rotative (34, 134) montée sur l'arbre de rotor (14), la bague d'étanchéité à labyrinthe rotative (34, 134) ayant une surface de labyrinthe tortueuse (38, 138) faisant face à la surface à labyrinthe tortueuse (36, 136) de la bague d'étanchéité à labyrinthe fixe (28, 128) à une première distance axiale minimale (D1, D11) de la surface d'étanchéité à labyrinthe fixe (36, 136) de la bague d'étanchéité à labyrinthe fixe (28, 128) de manière à former un labyrinthe annulaire entre la surface à labyrinthe tortueuse (36, 136) de la bague d'étanchéité à labyrinthe fixe (28, 128) et la surface à labyrinthe tortueuse (38, 138) de la bague d'étanchéité à labyrinthe rotative (34, 134), et
- un assemblage de palier (16, 116) monté de manière amovible entre l'assemblage de flasque (24, 124) et l'arbre de rotor (32), pour guider un mouvement de rotation du rotor (14) par rapport au stator (12) autour de l'axe de révolution (100),
**caractérisée en ce que** l'assemblage de flasque (24, 124) est pourvu d'une face de contact fixe (40, 140) et le rotor (14) comprend en outre une face de contact opposée (42, 142) faisant face axialement à la face de contact fixe (40, 140) de l'assemblage de flasque (24, 124) à une seconde distance axiale (D2, D12) de la face de contact fixe (40, 140) de l'assemblage de flasque (24, 124), la seconde distance axiale (D2, D12) étant plus courte que la première distance axiale minimale (D1, D11).

2. Machine électrique (10) selon la revendication 1, dans laquelle l'assemblage de palier (16, 116) comprend une cartouche de palier (44, 144), une bague de roulement externe (46, 146) ajustée dans la cartouche de palier (44, 144), et une bague de roulement interne (48, 148) ajustée sur l'arbre de rotor (32).

3. Machine électrique (10) selon la revendication 2, dans laquelle la cartouche de palier (44, 144) est pourvue de trous traversants de montage (62, 162) parallèles à l'axe de révolution (100) et alignés avec des trous filetés (65, 165) de l'assemblage de flasque (24, 124), l'assemblage de palier (16, 116) comprenant des boulons de fixation (66, 166) insérés dans les trous traversants de montage (62, 162) de la cartouche de palier (44, 144) et vissés dans les trous filetés (65, 165) de l'assemblage de flasque (24, 124) pour fixer la cartouche de palier (44, 144) à l'assemblage de flasque (24, 124).

4. Machine électrique (10) selon l'une quelconque des revendications 2 à 3, dans laquelle la cartouche de palier (44, 144) est pourvue de trous traversants de dégagement (68, 168), qui sont parallèles à l'axe de révolution (100) et alignés avec des trous traversants (70, 72, 170, 172) de l'assemblage de flasque (24, 124), et qui peuvent être alignés avec des trous filetés (74, 174) du rotor (14) dans une position angulaire indexée du rotor (14) par rapport au stator (12), les trous traversants de dégagement (68, 168) ayant un diamètre supérieur aux trous traversants (70, 72, 170, 172) de l'assemblage de flasque et des trous filetés (74, 174) du rotor (14), de sorte que dans la position angulaire indexée, des boulons de verrouillage (82, 182) peuvent être insérés dans les trous traversants de dégagement (68, 168) et dans les trous traversants (70, 72, 170, 172) de l'assemblage de flasque (24, 124), et vissés dans les trous filetés (74, 174) du rotor (14), avec une tête de boulon cylindrique (84) des boulons de verrouillage (82) en appui axial contre un bord des trous traversants (70, 72, 170, 172) de l'assemblage de flasque (24).

5. Machine électrique (10) selon l'une quelconque des revendications 2 à 4, comprenant en outre une rondelle de butée (54) fixée de manière amovible à une extrémité de l'arbre de rotor (32) de manière à s'appuyer axialement contre la bague de roulement interne (48) de l'assemblage de palier (16).

6. Machine électrique (10) selon l'une quelconque des revendications 2 à 5, dans laquelle l'assemblage de palier (10) comprend des éléments de roulement (50, 150) entre la bague de roulement externe (46, 146) et la bague de roulement interne (48, 148).

7. Machine électrique (10) selon l'une quelconque des revendications 2 à 6, dans laquelle un espace de palier interne (80, 180) rempli de lubrifiant est formé entre la bague de roulement interne (48, 148) et la bague de roulement externe (50, 150) et scellé par le labyrinthe annulaire formé entre la bague d'étanchéité à labyrinthe fixe (28, 128) et la bague d'étanchéité à labyrinthe rotative (34, 134).

8. Machine électrique (10) selon l'une quelconque des revendications 2 à 7, comprenant en outre un couvercle de palier externe (76) fixé de manière amovible à l'assemblage de flasque (24).

9. Machine électrique (10) selon l'une quelconque des revendications précédentes, dans laquelle la face de contact fixe (40, 140) est constituée d'un matériau d'isolation électrique.

10. Machine électrique (10) selon l'une quelconque des revendications précédentes, dans laquelle la face de contact opposée (42, 142) est constituée d'un matériau d'isolation électrique.

11. Machine électrique selon l'une quelconque des revendications 1 à 10, dans laquelle la face de contact fixe (40, 140) est réalisée d'une seule pièce avec la bague d'étanchéité à labyrinthe fixe (28, 128).

12. Machine électrique selon l'une quelconque des revendications 1 à 10, dans laquelle la face de contact fixe (40, 140) est formée sur le flasque (26, 126).

13. Machine électrique (10) selon l'une quelconque des revendications précédentes, dans laquelle la face de contact fixe (40, 140) comporte au moins une partie plane faisant face à une partie plane de la face de contact opposée (42, 142) à ladite seconde distance axiale.

14. Machine électrique (10) selon l'une quelconque des revendications précédentes, dans laquelle la bague d'étanchéité à labyrinthe fixe (28, 128) et la bague d'étanchéité à labyrinthe rotative (34, 134) sont pourvues de nervures tubulaires entrelacées (36, 38, 136, 138) alignées avec l'axe de révolution (100), le labyrinthe étant formé par un espace annulaire continu entre lesdites nervures tubulaires entrelacées (36, 38, 136, 138).

15. Machine électrique (10) selon l'une quelconque des revendications précédentes, dans laquelle la machine électrique (10) est un moteur d'entraînement d'un véhicule ferroviaire.
